# EUROPEAN PATENT APPLICATION

(11) **EP 4 742 730 A1**
(43) Date of publication of application: **13.05.2026**
(21) Application number: 23944571.1
(22) Date of filing: 07.07.2023
(51) Int. Cl.: H04W 24/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: Mewburn Ellis LLP
(86) International application number: PCT/CN2023/106407
(87) International publication number: WO 2025/010548

(57) **Abstract**

Provided are a wireless communication method and a communication device. The method comprises: a first network element receiving a first message transmitted by a second network element, wherein the first message is associated with a first sensing service, and the first message includes one or more pieces of the following information: an identifier of the first sensing service, and user plane configuration information associated with the first sensing service. In the embodiments of the present application, an identifier of a sensing service and/or user plane configuration information associated with the sensing service is introduced for the sensing service. The introduction of the identifier of the sensing service and/or the user plane configuration information associated with the sensing service facilitates the configuration of user plane information at a granularity of the sensing service.

## Description

### TECHNICAL FIELD

The present application relates to the field of communication, and in particular, to a wireless communication method and a communication device.

### BACKGROUND

With the development of communication technology, communication systems have gradually begun to support sensing services. In order to improve sensing effect (e.g., precision, or accuracy.) of the sensing service, collaboration among multiple sensing nodes (e.g., terminal devices) is often employed to perform the same sensing service. How to configure user plane information for these sensing nodes to meet the transmission requirements of the sensing service over the user plane is a problem that needs to be solved.

### SUMMARY

The present application provides a wireless communication method and a communication device. The various aspects of the present application will be introduced below.

In a first aspect, a wireless communication method is provided, and the method includes: receiving, by a first network element, a first message transmitted by a second network element, where the first message is associated with a first sensing service, and the first message includes one or more of the following information: an identity of the first sensing service; and user plane configuration information associated with the first sensing service.

In a second aspect, a wireless communication method is provided, and the method includes: transmitting, by a second network element, a first message to a first network element, where the first message is associated with a first sensing service, and the first message includes one or more of the following information: an identity of the first sensing service; and user plane configuration information associated with the first sensing service.

In a third aspect, a communication device is provided, which is a first network element. The first network element includes: a communication module, configured to receive a first message transmitted by a second network element, where the first message is associated with a first sensing service, and the first message includes one or more of the following information: an identity of the first sensing service; and user plane configuration information associated with the first sensing service.

In a fourth aspect, a communication device is provided, which is a second network element. The second network element includes: a communication module, configured to transmit a first message to a first network element, where the first message is associated with a first sensing service, and the first message includes one or more of the following information: an identity of the first sensing service; and user plane configuration information associated with the first sensing service.

In a fifth aspect, a communication device is provided and includes a transceiver, a memory and a processor. The memory is configured to store a program, and the processor is configured to invoke the program in the memory and control the transceiver to receive or transmit signals, to cause the communication device to perform the method in the first aspect or the second aspect.

In a sixth aspect, an apparatus is provided and includes a processor. The processor is configured to invoke a program from a memory, to cause the apparatus to perform the method in the first aspect or the second aspect.

In a seventh aspect, a chip is provided and includes a processor. The processor is configured to invoke a program from a memory, to cause a device equipped with the chip to perform the method in the first aspect or the second aspect.

In an eighth aspect, a computer-readable storage medium is provided and has a program stored thereon. The program causes a computer to perform the method in the first aspect or the second aspect.

In a ninth aspect, a computer program product is provided and includes a program. The program causes a computer to perform the method in the first aspect or the second aspect.

In a tenth aspect, a computer program is provided. The computer program causes a computer to perform the method in the first aspect or the second aspect.

The embodiments of the present application introduce the identity of the sensing service and/or user plane configuration information associated with the sensing service for the sensing service. The introduction of the identity of the sensing service and/or the user plane configuration information associated with the sensing service allows the user plane information to be configured at the granularity of per-sensing-service.

### BRIEF DESCRIPTION OF THE DRAWINGS

FIG. 1 is an example diagram showing a system architecture of a wireless communication system to which the embodiments of the present application are applicable.
FIG. 2 is a system architecture diagram of a 5th generation (5G) communication system.
FIG. 3 is an example diagram showing a communication system architecture with a sensing network element provided in the embodiments of the present application.
FIG. 4 is a schematic flowchart of a wireless communication method provided in the embodiments of the present application.
FIG. 5 is a schematic flowchart of a possible implementation of the method shown in FIG. 4.
FIG. 6 is a schematic flowchart of another possible implementation of the method shown in FIG. 4.
FIG. 7 is a schematic flowchart of another possible implementation of the method shown in FIG. 4.
FIG. 8 is a block diagram of a communication device provided in an embodiment of the present application.
FIG. 9 is a block diagram of a communication device provided in another embodiment of the present application.
FIG. 10 is a block diagram of an apparatus according to embodiments of the present application.

### DETAILED DESCRIPTION

Technical solutions in the present application will be described below with reference to the accompanying drawings.

### Wireless communication system

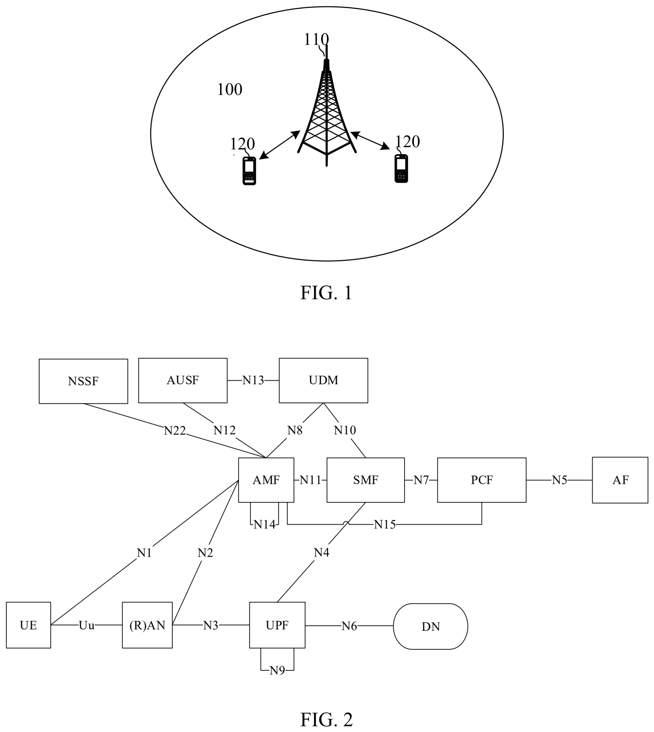

FIG. 1 is an example diagram showing a system architecture of a wireless communication system 100 to which the embodiments of the present application are applicable. The wireless communication system 100 may include a network device 110 and a terminal device 120. The network device 110 may be a device that communicates with the terminal device 120. The network device 110 may provide network coverage for a specific geographical area and may communicate with the terminal device 120 located within the coverage area. The terminal device 120 may access a network (e.g., a wireless network) through the network device 110. Optionally, the wireless communication system 100 may further include other network entities such as a network controller and a mobility management entity, which is not limited in the embodiments of the present application.

It should be understood that the technical solution of the embodiments of the present application may be applied to various communication systems, such as: a 5G system or a new radio (NR) system, a long term evolution (LTE) system, an LTE frequency division duplex (FDD) system, and an LTE time division duplex (TDD). The technical solution provided by the present application may also be applied to the future communication system, such as a sixth-generation mobile communication system, or a satellite communication system.

In the embodiments of the present application, the terminal device may also be referred to as a user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent or a user apparatus. In the embodiments of the present application, the terminal device may refer to a device that provides voice and/or data connectivity to a user and may be used to connect people, objects and machines, such as a handheld device or in-vehicle device with a wireless connection function. In the embodiments of the present application, the terminal device may be a mobile phone, a tablet computer (Pad), a laptop computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the terminal device may be configured to act as a base station. For example, the terminal device may act as a scheduling entity that provides sidelink signals between terminal devices in vehicle to everything (V2X) or device to device (D2D). For example, a cellular phone and a car may communicate with each other by using sidelink signals. A cellular phone and a smart home device may communicate directly without relaying communication signals via a base station.

In the embodiments of the present application, the network device may be a device used for communicating with a terminal device, and the network device may also be referred to as an access network device or a wireless access network device. For example, the network device may be a base station. The base station may broadly cover or be interchanged with the following various names: a NodeB, an evolved NodeB (eNB), a next generation NodeB (gNB), a relay station, an access point, a transmitting and receiving point (TRP), a transmitting point (TP), a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or similar entities, or a combination thereof.

Terminal devices can communicate with each other via sidelinks. Sidelink communication may also be referred to as proximity services (ProSe) communication, unilateral communication, sidelink communication, or D2D communication.

### 5G network system architecture and sensing network elements

The 5G network system architecture is shown in FIG. 2. In the system architecture, the UE establishes an access stratum connection with an access node (AN) via the air interface (Uu interface) to exchange access stratum messages and transmit wireless data. The UE establishes a non-access stratum (NAS) connection with an access and mobility management function (AMF) via an N1 interface to exchange NAS messages. In addition to managing UE mobility, the AMF is also responsible for forwarding session management-related messages between the UE and the SMF. A policy control function (PCF) is responsible for formulating policy related to the mobility management, session management, and charging of UE. A user plane function (UPF) transmits data with an external data network (DN) through an N6 interface and with the AN through an N3 interface.

Current cellular networks (including 5G networks) are primarily used for wireless data transmission and communication. However, radio electromagnetic wave signals used by the cellular network are not only applicable to wireless data transmission and communication, but also have environmental sensing capability. For example, the radio electromagnetic wave signals in the cellular network may be used for user action or gesture recognition, breathing monitoring, terminal device movement velocity measurement, environmental imaging, weather monitoring, etc. Therefore, the cellular network may also be used for obtaining sensing information.

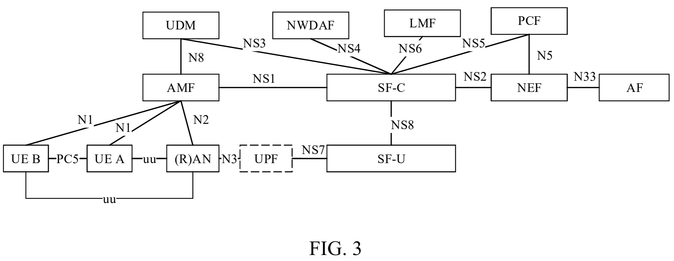

Currently, the support of sensing capability in the B5G (beyond 5G) network is udner discussion. For example, the sensing capability may be supported in the 3rd generation partnership project (3GPP) network by introducing a sensing network element (also referred to a sensing control network element) and corresponding procedures. FIG. 3 shows an example of a network system architecture supporting sensing capability. As shown in FIG. 3, a sensing network element (i.e., the sensing function (SF) in FIG. 3) is introduced into a core network to handle sensing-related operations. Upon receiving a sensing request from an application, the core network of the 3GPP network may select a correct base station or auxiliary terminal device through the sensing network element or AMF, and trigger the base station or auxiliary terminal device to enable a sensing-related wireless measurement capability, so as to initiate measurements of sensing information and ultimately generate a sensing result.

The main sensing links or sensing methods in integrated sensing and communication scenarios include the following:
1. a base station echo sensing link (single base station sensing): a base station transmits a sensing signal and receives an echo signal;
2. an inter-base station sensing link (base station to base station sensing): base station B receives a sensing signal transmitted by base station A;
3. an air interface uplink sensing link (terminal device to base station uplink sensing): a base station receives a sensing signal transmitted by a terminal;
4. an air interface downlink sensing link (terminal device to base station downlink sensing): a terminal device receives a sensing signal transmitted by a base station;
5. a terminal echo sensing link (single terminal device sensing): a terminal device transmits a sensing signal and receives an echo signal; and
6. an inter-terminal sensing link (terminal device to terminal device sensing): terminal device B receives a sensing signal transmitted by terminal device A.

In the early stage of B5G integrated sensing and communication, the focus is on maximizing reusing existing air interface signals to perform a sensing behavior without introducing excessive air interface enhancements. In addition, considering complexity of full-duplex implementation, collaborative sensing between terminal devices and/or base stations is a prioritized consideration. Among the sensing methods listed above, sensing methods 3-6 may require the terminal device to report a large amount of sensing data to the sensing network element in the core network or obtain auxiliary data from the core network element.

Currently, considering the large amount of interactive data between the terminal device and the sensing network element, the terminal device may transmit data with the sensing network element through the user plane to complete necessary interactions for the sensing service. For example, the terminal device may transmit the sensing data to the sensing network element through the UPF by establishing a protocol data unit (PDU) session (which may be a special PDU session). In an example where the sensing network element is SF shown in FIG. 3, the sensing network element may include an SF-C (a control plane network element of the SF) and an SF-U (a user plane network element of the SF) in some implementations. The terminal device can, for example, transmit sensing data to the SF-U via the UPF. Of course, SF, SF-C, and SF-U are merely example names for these network elements. These network elements may also have other names, or may be collocated with a location management function (LMF), which is not specifically limited in the embodiments of the present application. In order to improve sensing effect (e.g., precision, or accuracy,) of the sensing service, collaboration among multiple sensing nodes (e.g., terminal devices) is often employed to perform the same sensing service. These sensing nodes may have the same requirements for user plane connection. For example, these sensing nodes may have the same requirements for one or more of the following aspects of the user plane connection: Quality of Service (QoS) related parameters, transmission rate, maximum delay, packet error rate, local traffic steering requirements (e.g., perform local traffic steering on data packets to reduce delay and improve processing efficiency). How to configure user plane information for these sensing nodes to meet transmission requirements of the sensing service over the user plane is a problem that needs to be solved. For example, current sessions of the terminal device for data transmission are adjusted at the granularity of per-terminal-device, typically through requests from the application function (AF). If the timing of the completion of the sensing service in a collaborative way changes due to reasons such as mobility, the dynamic configuration of user plane information-being complex and time-consuming when performed at the granularity of per-terminal-device-may fail to meet the requirements of the sensing service.

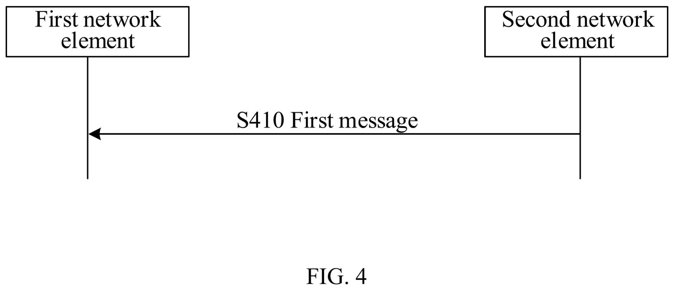

In response to the above problems, the embodiments of the present application introduce an identity of a first sensing service and/or user plane configuration information associated with the first sensing service for the sensing service, which thereby facilitates the configuration of user plane information at the granularity of per-sensing-service, thereby facilitating maintenance of user plane configuration information for multiple sensing nodes (e.g., terminal devices) involved in the same sensing service. The embodiments of the present application are described in detail below with reference to FIG. 4.

FIG. 4 is a schematic flowchart of a wireless communication method provided in the embodiments of the present application. The method shown in FIG. 4 includes step S410, i.e., receiving, by a first network element, a first message transmitted by a second network element. The first message is associated with a first sensing service, and the first message includes one or more of the following information: an identity (ID) of the first sensing service; and user plane configuration information associated with the first sensing service.

In some implementations, the first network element may be a core network element. In other embodiments, the first network element may be a terminal device. For example, the first network element may be one of the following network elements: a PCF, a binding support function (BSF), a SF, a network exposure function (NEF), a gateway mobile location centre (GMLC), a SMF, an LMF, a unified data repository (UDR), and a terminal device.

In some implementations, the second network element may be a core network element. In other embodiments, the second network element may be a terminal device. For example, the second network element may be one of the following network elements: an SF, an NEF, a GMLC, an LMF, a PCF, an SMF, a network element requesting a sensing service, and a terminal device. The network element requesting the sensing service may sometimes be referred to as a consumer network function (consumer NF). The network element requesting the first sensing service may be, for example, an AF, an NEF, an AMF, a terminal device, or a GMLC.

In some implementations, the user plane configuration information includes one or more of the following information: a QoS related parameter, local traffic steering related information, and a requirement parameter of the first sensing service.

In some implementations, QoS parameters may include, for example, one or more of the following parameters: an allocation and retention priority (ARP), a guaranteed flow bit rate (GFBR), a maximum flow bit rate (MFBR), a maximum packet loss rate (MPLR), and parameters related to a 5G QoS identifier (5QI). In the above QoS parameters, the GFBR may include an uplink GFBR or a downlink GFBR, the MFBR may include an uplink MFBR or a downlink MFBR, and the MPLR may include an uplink MPLR or a downlink MPLR. In addition, in the QoS parameters, parameters related to the 5QI may include one or more of the following parameters: a priority level (or default priority), a resource type (e.g., a guaranteed bit rate (GBR) type or a Non-GBR type), a packet delay budget (PDB), a packet error rate (PER), or a maximum data burst volume (MDBV). 5QI facilitates templated configuration for specific service types by defining a 5QI serial number and a corresponding set of default values for the above 5QI-related parameters.

In some implementations, the requirement parameter of the first sensing service include one or more of:
a requested sensing manner;
a type of the sensing service;
a sensing scenario;
a sensing service level (different sensing scenarios may be classified into different service levels);
a sensing area (e.g., one or more of: indoor or outdoor, an area size, a type of a sensing target);
a confidence level (indicating reliability of a sensing result);
position estimation accuracy (including horizontal position accuracy and/or vertical position accuracy (e.g., meters/decimeters/centimeters));
velocity estimation accuracy (including horizontal velocity accuracy and/or vertical velocity accuracy);
sensing resolution (e.g., range resolution and/or velocity resolution);
a maximum sensing service delay;
a refresh rate (e.g. 10 refreshes per second);
a missed detection rate (also referred to as the missing alarm rate); and
a false alarm rate.

In some implementations, the local traffic steering related information (or local traffic steering requirements) is used to indicate whether to perform traffic steering processing on local data packets. For example, if it is desired to perform traffic steering processing on data packets to reduce latency and/or improve processing efficiency, the local traffic steering related information may be configured in the user plane configuration information to support the local traffic steering operation. Exemplarily, the local traffic steering related information may include one or more of the following information: location information, a user equipment identifier, a data network name (DNN), single network slice selection assistance information (S-NSSAI) and corresponding data network access identity (DNAI) information.

As mentioned above, the present application aims to configure user plane information at the granularity of per-sensing-service. There are many implementations for the configuration of user plane information at the granularity of per-sensing-service. For example, the first sensing service may be associated with a same PCF. As another example, one or more PCFs associated with the first sensing service may be required to obtain user plane configuration information of the first sensing service via the UDR. The above two implementations are described in more detail below with reference to Embodiment 1 and Embodiment 2.

### Embodiment 1: first sensing services are associated with the same PCF (hereinafter referred to as a first PCF)

### Embodiment 1.1: the first network element is the first PCF, and the second network element is an SF, an NEF, a GMLC or an LMF

In some implementations, the second network element is a network element in a core network that provides an interface to external entities, such as an NEF or a GMLC.

In some implementations, the second network element is a network element with a sensing function, such as an SF or an LMF.

In some embodiments, the first message is used for requesting the first PCF to authorize the first sensing service. Alternatively, the first message is used for requesting the first PCF to provide service for the first sensing service. Alternatively, the first message is used for requesting the first PCF to provide policy control for the first sensing service. The first message may include an identity of the first sensing service.

In some implementations, before the second network element transmits the first message (used for requesting the first PCF to authorize the first sensing service) to the first network element, the second network element may receive a sensing request from a network element requesting a sensing service. The network element requesting the sensing service may sometimes be referred to as a consumer NF, which may be, for example, an AF, an NEF, an AMF, a terminal device, or a GMLC. The sensing request may include one or more of the following information: information of a sensing target, information of the sensing service (e.g., the type of the sensing service, and the requirements of the sensing service).

In some implementations, before the second network element transmits the first message (used for requesting the first PCF to authorize the first sensing service) to the first network element, the second network element may first perform PCF discovery and selection. For example, the second network element may query a network repository function (NRF) to determine a PCF capable of serving the first sensing service. As another example, the second network element may search for the corresponding PCF according to pre-configuration information.

In some implementations, after the second network element transmits the first message (used for requesting the first PCF to authorize the first sensing service) to the first network element, the first network element may perform authorization verification on the first sensing service.

In some implementations, after the second network element transmits the first message (used for requesting the first PCF to authorize the first sensing service) to the first network element, the first network element may register an association relationship between the first sensing service and the first PCF with a BSF. In other words, the first network element may transmit the identity of the first sensing service and an identifier of the first PCF to the BSF.

In some implementations, after the first network element completes registration with the BSF, the first network element may transmit a second message to the second network element. The second message may be referred to as an authorization response message for the first sensing service. For example, the second message may be used to indicate to the second network element that the first sensing service has been authorized.

In some implementations, the first message may be used for requesting the first PCF to configure or modify the first sensing service. For example, the first message may be used for requesting the first PCF to configure or update a QoS parameter corresponding to the first sensing service. The first message may include an identity of the first sensing service and user plane configuration information associated with the first sensing service.

In some implementations, before the second network element transmits the first message (used for requesting the first PCF to configure or modify the first sensing service) to the first network element, the second network element may first discover and select the first network element (i.e., the first PCF). For example, the second network element may obtain a first PCF corresponding to the first sensing service via the BSF. As an example, the second network element may transmit an identity of the first sensing service to the BSF, and receive an identifier of the first PCF returned by the BSF.

In some implementations, before the second network element transmits the first message (used for requesting the first PCF to configure or modify the first sensing service) to the first network element, the second network element may first receive the sensing request from the network element requesting the sensing service. The network element requesting the sensing service may sometimes be referred to as a consumer NF,, which may be, for example, an AF, an NEF, an AMF, a terminal device, or a GMLC. The sensing request may include one or more of the following information: information of the sensing target, information of the sensing service (e.g., the type of the sensing service, and the requirements of the sensing service). The sensing request may include an identity of the first sensing service and/or configuration information associated with the first sensing service (the content of the configuration information may be referred to the preceding description). Furthermore, in some implementations, the above configuration information may be generated by the second network element autonomously.

### Embodiment 1.2: the first network element is a BSF, and the second network element is a first PCF

In some implementations, the first message may be used for registering an association relationship between the first sensing service and the first PCF. For example, the first message may include an identity of the first sensing service and an identifier of the first PCF.

In some implementations, before the second network element transmits the first message (used for registering the association relationship between the first sensing service and the first PCF) to the first network element, the second network element receives a third message from an SF, an NEF, a GMLC or an LMF, and the third message may be used for requesting the first PCF to authorize the first sensing service. Alternatively, the third message may be used for requesting the first PCF to provide service for the first sensing service. Alternatively, the third message may be used for requesting the first PCF to provide policy control for the first sensing service. The third message may include, for example, an identity of the first sensing service.

In some implementations, after the second network element transmits the first message (used for registering the association relationship between the first sensing service and the first PCF) to the first network element, the second network element may transmit a fourth message to the first network element. The fourth message may be referred to as an authorization response message for the first sensing service. For example, the fourth message may be used to indicate to an SF, an NEF, a GMLC or an LMF that the first sensing service has been authorized.

In some implementations, after the second network element transmits the first message (used for registering the association relationship between the first sensing service and the first PCF) to the first network element, the first network element may receive a fifth message transmitted by another PCF (hereinafter referred to as a second PCF) different from the first PCF. The fifth message may be used for obtaining an identifier of the first PCF. The fifth message may include an identity of the first sensing service. In response to the fifth message, the first network element may transmit the identifier of the first PCF to the second PCF.

### Embodiment 1.3: the first network element is a BSF, and the second network element is a second PCF different from the first PCF

In some implementations, the first message may be used for obtaining an identifier of the PCF corresponding to the first sensing service. Alternatively, the first message may be used for querying the PCF corresponding to the first sensing service. The first message may include an identity of the first sensing service.

In some implementations, after the second network element transmits the first message (used for obtaining the identifier of the PCF corresponding to the first sensing service) to the first network element, the first network element may transmit the identifier of the first PCF to the second network element.

In some implementations, before the second network element transmits the first message (used for obtaining the identifier of the PCF corresponding to the first sensing service) to the first network element, the first network element may receive a sixth message transmitted by the first PCF. The sixth message may be used for registering an association relationship between the first PCF and the first sensing service. For example, the sixth message may include an identifier of the first PCF and an identity of the first sensing service.

In some implementations, before the second network element transmits the first message (used for obtaining the identifier of the PCF corresponding to the first sensing service) to the first network element, the second network element may receive a seventh message transmitted by an SMF. The seventh message may be used for requesting a session policy for the first sensing service. The seventh message may include an identity of the first sensing service.

In some implementations, after the second network element transmits the first message (used for obtaining the identifier of the PCF corresponding to the first sensing service) to the first network element, the second network element may trigger a PCF switch procedure to switch a serving PCF of the current session from the second PCF to the first PCF.

### Embodiment 1.4: the first network element is an SF, an NEF, a GMLC or an LMF, and the second network element is a network element requesting a sensing service

In some implementations, the network element requesting the sensing service may sometimes be referred to as a consumer NF, which may be, for example, an AF, an NEF, an AMF, a terminal device, or a GMLC.

In some implementations, the first network element is a network element in a core network that provides an interface to external entities, such as the NEF or GMLC.

In some implementations, the first network element is a network element with a sensing function, such as the SF or LMF.

In some implementations, the first message may be used for requesting the first sensing service. The first message may include an identity of the first sensing service.

In some implementations, after the second network element transmits the first message (used for requesting the first sensing service) to the first network element, the first network element may transmit an eighth message to a first PCF. The eighth message may be used for requesting the first PCF to authorize the first sensing service. Alternatively, the eighth message may be used for requesting the first PCF to provide service for the first sensing service. Alternatively, the eighth message may be used for requesting the first PCF to provide policy control for the first sensing service. The eighth message may include an identity of the first sensing service.

In some implementations, after the second network element transmits the first message (used for requesting the first sensing service) to the first network element, the first network element may discover terminal device(s). For example, the first network element may discover corresponding terminal device(s) based on the first message and obtain the capability information of the terminal device(s). For example, the first network element may discover terminal device(s) by querying other network elements (e.g., AMF/UDR/unified data management (UDM)). As another example, the first network element may discover terminal device(s) by querying local information. Then, the first network element can select a terminal device to perform the first sensing service based on the first message.

In some implementations, after the second network element transmits the first message (used for requesting the first sensing service) to the first network element, the first network element may transmit a ninth message to a terminal device (the one selected to perform the first sensing service, or the one associated with the first sensing service). The ninth message may include an identity of the first sensing service and/or user plane information. The user plane information may be used for the establishment of a session corresponding to the first sensing service. For example, the user plane information may include address information required for transmitting sensing data of the first sensing service over the user plane. The address information may include an internet protocol (IP) address and/or a fully qualified domain name (FQDN) of the first network element.

### Embodiment 1.5: the first network element is a terminal device, and the second network element is an SF or an LMF

In some implementations, the first message may be used for transmitting user plane information to the terminal device. The user plane information may be used for the establishment of a session corresponding to the first sensing service. For example, the user plane information may include address information required for transmitting sensing data of the first sensing service over the user plane. The address information may include an IP address and/or FQDN of the second network element. The first message may include an identity of the first sensing service.

In some implementations, after the second network element transmits the first message (used for transmitting the user plane information to the terminal device) to the first network element, the first network element may transmit a tenth message to an SMF. The tenth message may be used for requesting establishment or modification of a session corresponding to the first sensing service. The tenth message may include an identity of the first sensing service.

In some implementations, before the second network element transmits the first message (used for transmitting the user plane information to the terminal device) to the first network element, the second network element may receive an eleventh message transmitted by the network element requesting the sensing service. The network element requesting the sensing service may sometimes be referred to as a consumer NF, which may be, for example, an AF, a NEF, an AMF, a terminal device, or a GMLC. The eleventh message may be a sensing request, and the eleventh message may include an identity of the first sensing service.

In some implementations, before the second network element transmits the first message (used for transmitting the user plane information to the terminal device) to the first network element, the second network element may discover terminal device(s). For example, the second network element may discover corresponding terminal device(s) based on the first message and obtain the capability information of the terminal device(s). For example, the second network element may discover terminal device(s) by querying other network elements (e.g., AMF/UDR/UDM). In another example, the second network element may discover terminal device(s) by querying the local information, Then, the second network element selects a terminal device to perform the first sensing service based on the first message.

### Embodiment 1.6: the first network element is an SMF, and the second network element is a terminal device

In some implementations, the first message may be used for requesting establishment or modification of a session corresponding to the first sensing service. The first message may include an identity of the first sensing service.

In some implementations, before the second network element transmits the first message (used for requesting establishment or modification of the session corresponding to the first sensing service) to the first network element, the second network element may receive a twelfth message from an SF or an LMF. The twelfth message may be used for transmitting user plane information to the terminal device. The user plane information may be used for the establishment of the session corresponding to the first sensing service. For example, the user plane information may include address information required for transmitting sensing data of the first sensing service over the user plane. The address information may include an IP address and/or FQDN of the second network element. The twelfth message may include an identity of the first sensing service.

In some implementations, after the second network element transmits the first message (used for requesting establishment or modification of the session corresponding to the first sensing service) to the first network element, the first network element may transmit a thirteenth message to the first PCF or the second PCF. The thirteenth message may be used for requesting a session policy for the first sensing service. The thirteenth message may include an identity of the first sensing service.

### Embodiment 1.7: the first network element is a first PCF or a second PCF, and the second network element is an SMF

In some implementations, the first message may be used for requesting a session policy corresponding to the first sensing service.

In some implementations, if the first network element is the second PCF, after the second network element transmits the first message (used for requesting the session policy corresponding to the first sensing service) to the first network element, the first network element may transmit a fourteenth message to the BSF. The fourteenth message may be used for obtaining an identifier corresponding to the first PCF. The tenth message may include an identity of the first sensing service. Furthermore, in some implementations, after obtaining the identifier corresponding to the first PCF, the first network element may trigger a PCF switch procedure to switch the serving PCF of the current session from the second PCF to the first PCF.

In some implementations, before the second network element transmits the first message (used for requesting the session policy corresponding to the first sensing service) to the first network element, the second network element may receive a fifteenth message transmitted by the terminal device. The fifteenth message may be used for requesting establishment or modification of a session corresponding to the first sensing service. The fifteenth message may include the identity of the first sensing service.

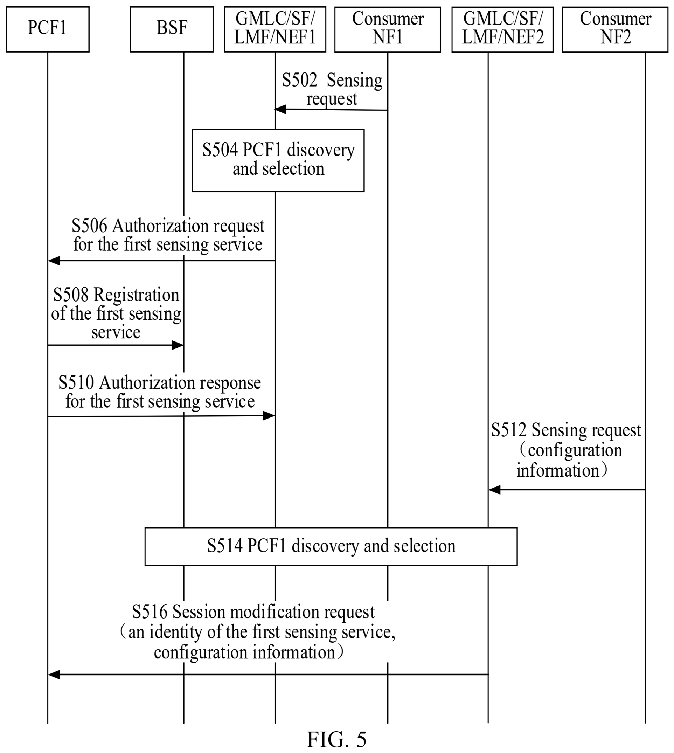

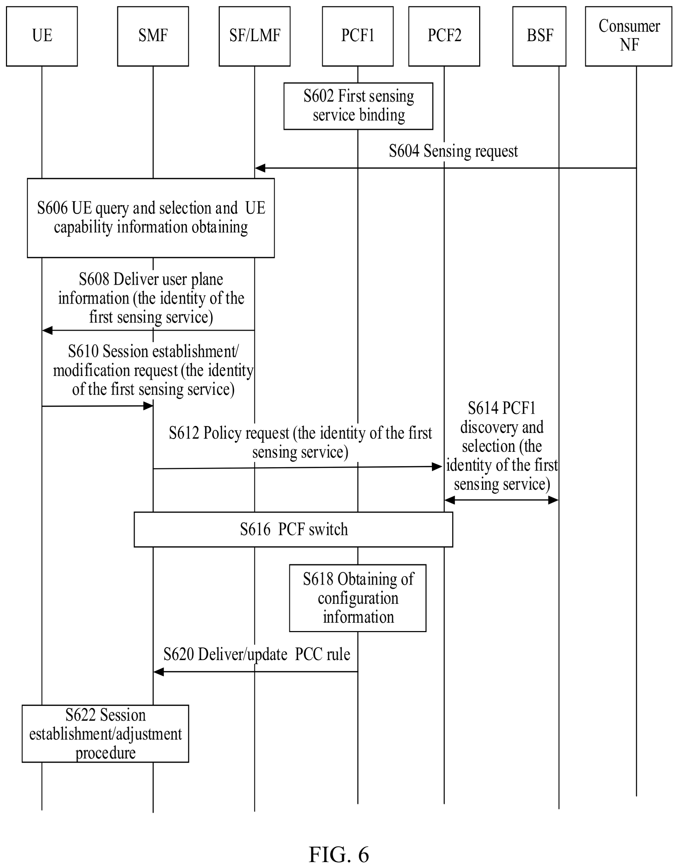

Embodiment 1 will be described in more detail below with reference to FIG. 5 and FIG. 6. In the following example, the same PCF (i.e., PCF1 in the following text, corresponding to the first PCF in the previous text) is selected to provide service for the first sensing service, and subsequent configuration information is transmitted to the PCF. In addition, in the example below, after receiving a sensing request, network elements such as GMLC/SF/LMF/NEF will parse or generate an identity of the first sensing service according to the sensing request. The network elements such as GMLC/SF/LMF/NEF then query an available PCF and transmit an authorization request to the PCF. If the PCF can provide service for the first sensing service, the PCF may register the identity of the first sensing service in a BSF. Subsequently, all configuration information associated with the first sensing service may be transmitted to this PCF.

Referring to FIG. 5, in step S502, Consumer NF1 transmits a sensing request to GMLC/SF/LMF/NEF1. Consumer NF may be, for example, an AF, an NEF, an AMF, a UE or a GMLC. The sensing request may include information of the sensing target and/or information of the sensing service for the first sensing service (e.g., a type of the first sensing service, or requirements of the first sensing service).

In step S504, GMLC/SF/LMF/NEF1 performs PCF discovery and selection. For example, GMLC/SF/LMF/NEF1 can discover a PCF capable of serving the first sensing service by querying an NRF based on the sensing request. Alternatively, GMLC/SF/LMF/NEF1 may search for a PCF capable of serving the first sensing service based on pre-configured information.

In step S506, GMLC/SF/LMF/NEF1 initiates an authorization request for the first sensing service to PCF1. The authorization request may include an identity of the first sensing service.

In step S508, after PCF1 completes the authorization verification, PCF1 registers an association relationship between PCF1 and the first sensing service with a BSF. The registration message may include an identifier of PCF1 and an identity of the first sensing service.

In step S510, PCF1 returns an authorization response for the first sensing service to the GMLC/SF/LMF/NEF1.

In step S512, Consumer NF2 (which may be the same as or different from Consumer NF1) transmits a sensing request to GMLC/SF/LMF/NEF2 (which may be the same as or different from GMLC/SF/LMF/NEF1). The sensing request may include an identity and configuration information of the first sensing service. The configuration information may include a QoS related parameter, local traffic steering related information, and a sensing requirement parameter of the first sensing service. The QoS related parameter may include, for example, one or more of a transmission rate, a maximum delay, and a packet error rate. The local traffic steering related information may also be referred to as local traffic steering requirements, which may be used to indicate whether to perform local traffic steering on data packets to reduce latency and improve processing efficiency. The sensing requirement parameter of the first sensing service may includes one or more of: a sensing type, sensing resolution, sensing accuracy, a confidence level, a missed detection rate, a false alarm rate, and a refresh rate. In some embodiments, the configuration information may be generated by GMLC/SF/LMF/NEF2 autonomously.

In step S514, GMLC/SF/LMF/NEF2 performs discovery and selection of PCF1. For example, GMLC/SF/LMF/NEF2 may query a BSF based on the identity of the first sensing service to obtain the identifier of PCF1 corresponding to the first sensing service.

In step S516, GMLC/SF/LMF/NEF2 transmits a session modification request message to PCF1. The session modification request message includes the identity of the first sensing service and configuration information obtained based on step S512.

In the example shown in FIG. 5, a dedicated identity is allocated to the first sensing service, and the PCF serving the first sensing service (i.e., PCF1 mentioned above) registers an association relationship between the identity of the first sensing service and the PCF with BSF. In this way, all configuration information associated with the first sensing service may be stored in a corresponding PCF, thereby achieving unified management of the same sensing service.

Referring again to FIG. 6, in the example shown in FIG. 6, SF/LMF transmits the identity of the first sensing service to UE. When UE establishes a corresponding session, it carries the identity of the first sensing service, so that different UEs involved in the same sensing service can select the same PCF, thereby allowing different UEs to be configured based on the same user plane configuration information.

In step S602, the first sensing service is bound to PCF1. For example, for the implementation of step S602, reference may be made to steps S502 to S510 in FIG. 5. After step S602 is completed, PCF1 registers the identity of the first sensing service with BSF.

In step S604, Consumer NF transmits a sensing request to SF/LMF. Consumer NF may be, for example, an AF, an NEF, an AMF, a UE or a GMLC. The sensing request may be used for requesting the first sensing service, and the sensing request may include the identity of the first sensing service.

In step S606, SF/LMF may discover a suitable UE according to the sensing request from Consumer NF and obtain capability information of UE. For example, SF/LMF may discover suitable UE(s) by querying other network elements (e.g., AMF/UDR/UDM,). In another example, SF/LMF may discover suitable UE(s) by querying the local information. Then, based on information such as the sensing request from Consumer NF, SF/LMF can select a UE to perform the first sensing service.

In step S608, SF/LMF transmits a message including user plane information to the selected UE. The user plane information may include address information for user plane sensing data transmission (e.g., the IP address or FQDN of the SF/LMF). In addition, the message may further include the identity of the first sensing service.

In step S610, after receiving the user plane information transmitted by SF, UE initiates a session establishment/modification request to SMF. The session establishment/modification request may include the identity of the first sensing service.

In step S612, after receiving the session establishment/modification request, SMF initiates a policy request to PCF2. The policy request may be used for requesting a session policy for the first sensing service from PCF2, and the policy request may include the identity of the first sensing service.

In step S614, after receiving the policy request, PCF2 discovers and selects PCF1 corresponding to the first sensing service via BSF. For example, PCF2 transmits the identity of the first sensing service to BSF, to enable BSF to perform query to determine PCF1 corresponding to the first sensing service and return the identifier of PCF1 to PCF2.

In step S616, after receiving the identifier of PCF1, PCF2 triggers a PCF switch procedure to switch the serving PCF of the current session to PCF1.

In step S618, PCF1 obtains the configuration information associated with the first sensing service. For example, for the way to obtain the configuration information, reference may be made to steps S512 to S516 in FIG. 5.

In step S620, PCF1 generates (or updates) a corresponding PCC rule according to the obtained configuration information and transmits it to SMF.

In step S622, SMF completes the session establishment/adjustment procedure according to the PCC rule.

In the example shown in FIG. 6, the identity of the first sensing service is transmitted to UE and subsequently carried by UE in the session establishment/modification request, thereby enabling the identity of the first sensing service to be used for PCF switch (or reselection). The above procedure ensures that UEs performing the same sensing service can select the same PCF and obtain relevant configuration information from this PCF. Subsequently, this PCF may adjust the user plane configuration through the PCC rule, thereby achieving unified management of the same sensing service.

### Embodiment 2: the first sensing service is associated with one or more PCFs, and the one or more PCFs obtain the user plane configuration information from a UDR

### Embodiment 2.1: the first network element is the UDR, and the second network element is one of the one or more PCFs

In some implementations, the first message may be used for subscribing to notifications associated with the identity of the first sensing service. The first message may include the identity of the first sensing service.

In some implementations, before the second network element transmits the first message (used for subscribing to notifications associated with the identity of the first sensing service) to the first network element, the second network element may receive a sixteenth message transmitted by an SMF. The sixteenth message may be used for requesting a session policy corresponding to the first sensing service. The sixteenth message may include the identity of the first sensing service.

In some implementations, after the second network element transmits the first message (used for subscribing to notifications associated with the identity of the first sensing service) to the first network element, the first network element may transmit a seventeenth message to the second network element. The seventeenth message may be used for notifying the second network element of the data associated with the first sensing service. For example, the seventeenth message may include the identity and/or configuration information of the first sensing service (reference may be made to the foregoing description for the content of the configuration information).

In some implementations, the first network element may receive an eighteenth message from other network elements. The eighteenth message is used for the storage of the configuration information of the first sensing service (which may further include the identity of the first sensing service). Further, in response to the eighteenth message, the first network element transmits the seventeenth message mentioned above to the second network element. The other network elements may include the network element requesting a sensing service. The network element requesting the sensing service may sometimes be referred to as a consumer NF, which may be, for example, an AF, an NEF, an AMF, a terminal device, or a GMLC.

### Embodiment 2.2: the first network element is the UDR, and the second network element is a network element requesting a sensing service

In some implementations, the network element requesting the sensing service may sometimes be referred to as a consumer NF, which may be, for example, an AF, an NEF, an AMF, a terminal device, or a GMLC.

In some implementations, the first message may be used for the storage of the user plane configuration information in the UDR.

In some implementations, after the second network element transmits the first message (used for subscribing to notifications associated with the identity of the first sensing service) to the first network element, the first network element may transmit a nineteenth message to the PCF (the PCF that has subscribed to the first sensing service). The nineteenth message may be used for notifying data associated with the first sensing service. For example, the nineteenth message may include the identity and/or configuration information of the first sensing service (reference may be made to the foregoing description for the content of the configuration information).

### Embodiment 2.3: the first network element is an SF or an LMF, and the second network element is a network element requesting the sensing service

In some implementations, the network element requesting the sensing service may sometimes be referred to as a consumer NF, for example, an AF, an NEF, an AMF, a terminal device, or a GMLC.

In some implementations, the first message may be used for requesting the first sensing service. The first message may include the identity of the first sensing service.

In some implementations, after the second network element transmits the first message (used for requesting the first sensing service) to the first network element, the first network element may discover terminal device(s). For example, the first network element may discover the corresponding terminal device(s) based on the first message and obtain the capability information of the terminal device(s). For example, the first network element may discover terminal device(s) by querying other network elements (e.g., AMF/UDR/UDM). As another example, the first network element may discover terminal device(s) by querying the local information. Then, based on the first message, the first network element can select a terminal device to perform the first sensing service.

In some implementations, after the second network element transmits the first message (used for requesting the first sensing service) to the first network element, the first network element may transmit a twentieth message to a terminal device (i.e., the terminal device that performs the first sensing service, or the terminal device associated with the first sensing service). The twentieth message may include the identity of the first sensing service and/or user plane information. The user plane information may be used for the establishment of a session corresponding to the first sensing service. For example, the user plane information may include address information required for transmitting sensing data of the first sensing service over the user plane. The address information may include an IP address and/or FQDN of the first network element.

### Embodiment 2.4: the first network element is a terminal device, and the second network element is an SF or an LMF

In some implementations, the first message may be used for transmitting the user plane information to the terminal device. The user plane information may be used for establishment of a session corresponding to the first sensing service. For example, the user plane information may include address information required for transmitting sensing data of the first sensing service over the user plane. The address information may include an IP address and/or FQDN of the second network element. The first message may include an identity of the first sensing service.

In some implementations, after the second network element transmits the first message (used for transmitting the user plane information to the terminal device) to the first network element, the first network element may transmit a twenty-first message to the SMF. The twenty-first message may be used for requesting establishment or modification of the session corresponding to the first sensing service. The tenth message may include the identity of the first sensing service.

In some implementations, before the second network element transmits the first message (used for transmitting the user plane information to the terminal device) to the first network element, the second network element may receive a twenty-second message transmitted by a network element requesting the sensing service. The network element requesting the sensing service may sometimes be referred to as a consumer NF, which may be, for example, an AF, an NEF, an AMF, a terminal device, or a GMLC. The twenty-second message may be a sensing request, and the twenty-second message may include the identity of the first sensing service.

In some implementations, before the second network element transmits the first message (used for transmitting the user plane information to the terminal device) to the first network element, the second network element may discover terminal device(s). For example, the second network element may discover corresponding terminal device(s) based on the first message and obtain the capability information of the terminal device(s). For example, the second network element may discover terminal device(s) by querying other network elements (e.g., AMF/UDR/UDM). As another example, the second network element may discover terminal device(s) by querying local information. Then, the second network element can select a terminal device to perform the first sensing service based on the first message.

### Embodiment 2.5: the first network element is an SMF, and the second network element is a terminal device

In some implementations, the first message may be used for requesting establishment or modification of a session corresponding to the first sensing service. The first message may include an identity of the first sensing service.

In some implementations, before the second network element transmits the first message (used for requesting the establishment or modification of the session corresponding to the first sensing service) to the first network element, the second network element may receive a twenty-third message from the SF or LMF. The twenty-third message may be used for transmitting user plane information to a terminal device. The user plane information may be used for the establishment of the session corresponding to the first sensing service. For example, the user plane information may include address information required for transmitting sensing data of the first sensing service over the user plane. The address information may include an IP address and/or FQDN of the first network element. The twenty-third message may include the identity of the first sensing service.

In some implementations, after the second network element transmits the first message (used for requesting the establishment or modification of the session corresponding to the first sensing service) to the first network element, the first network element may transmit a twenty-fourth message to the PCF. The twenty-fourth message may be used for requesting a session policy for the first sensing service. The twenty-fourth message may include the identity of the first sensing service.

### Embodiment 2.6: the first network element is a PCF and the second network element is an SMF

In some implementations, the first message may be used for requesting a session policy corresponding to the first sensing service.

In some implementations, before the second network element transmits the first message (used for requesting the session policy corresponding to the first sensing service) to the first network element, the second network element may receive a twenty-fifth message transmitted by a terminal device. The twenty-fifth message may be used for requesting establishment or modification of a session corresponding to the first sensing service. The twenty-fifth message may include an identity of the first sensing service.

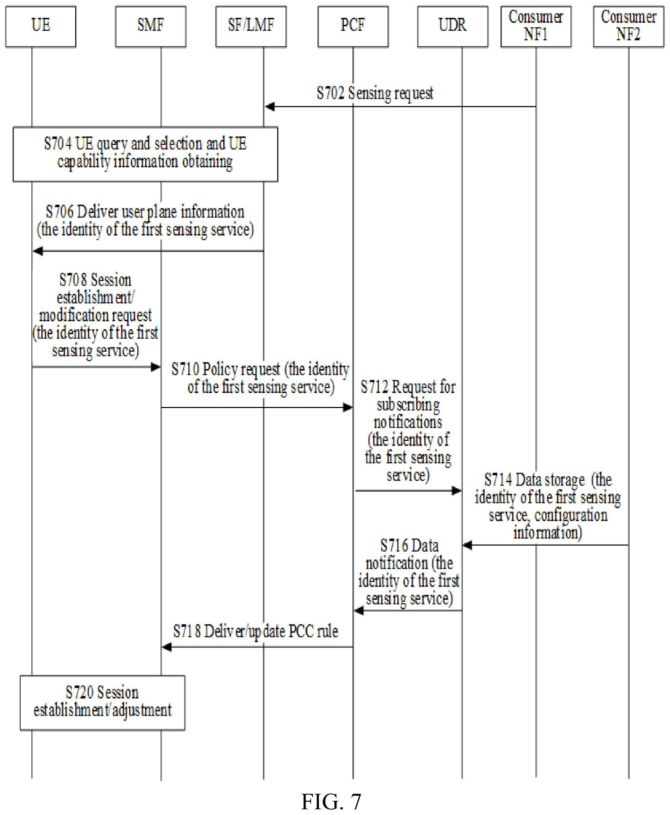

Embodiment 2 will be described in more detail below with reference to FIG. 7. FIG. 7 shows the delivery and update of configuration information for the granularity of the first sensing service via the UDR. In the example shown in FIG. 7, the configuration information associated with the first sensing service and the identity of the first sensing service may be stored in the UDR, and the PCF may subscribe to the configuration information corresponding to the identity of the first sensing service from the UDR. After obtaining the configuration information, the PCF may deliver PCC rule(s) to configure or adjust the user plane.

Referring to FIG. 7, in step S702, Consumer NF1 (which may be an AF, an NEF, an AMF, a UE or a GMLC, etc.) transmits a sensing request to SF/LMF. The sensing request may include an identity of a first sensing service. Of course, in some implementations, the identity of the first sensing service may also be determined by the SF/LMF.

In step S704, SF/LMF may discover a suitable UE according to the sensing request from Consumer NF1 and obtain capability information of the UE. For example, SF/LMF may discover suitable UE(s) by querying other network elements (e.g., AMF/UDR/UDM). As another example, SF/LMF may discover suitable UE(s) by querying local information. Then, based on information such as the sensing request from Consumer NF1, SF/LMF can select a UE to perform the first sensing service.

In step S706, SF/LMF transmits a message including user plane information to the selected UE. The user plane information may include address information for transmitting user plane sensing data (e.g., an IP address and FQDN of SF/LMF). In addition, the message may further include the identity of the first sensing service.

In step S708, after receiving the user plane information transmitted by SF, UE initiates a session establishment/modification request to SMF. The session establishment/modification request may include the identity of the first sensing service.

In step S710, after receiving the session establishment/modification request, SMF initiates a policy request to PCF2. The policy request may be used for requesting a session policy for the first sensing service from the PCF2, and the policy request may include the identity of the first sensing service.

In step S712, PCF subscribes to notifications related to the first sensing service (or the identity of the first sensing service) from UDR.

In step S714, Consumer NF2 transmits a storage request to UDR. Consumer NF2 may be an AF, an NEF, an AMF, a UE or a GMLC, etc. Consumer NF2 and Consumer NF1 may be the same network element or different network elements. The storage request may include the identity of the first sensing service. In addition, the storage request may further include configuration information associated with the first sensing service. The configuration information may include a QoS related parameter, local traffic steering related information, and a sensing requirement parameter of the first sensing service. The QoS related parameter may include, for example, one or more of a transmission rate, a maximum delay, and a packet error rate. The local traffic steering related information may also be referred to as local traffic steering requirements, which may be used to indicate whether to perform local traffic steering on data packets to reduce latency and improve processing efficiency. The sensing requirement parameter of the first sensing service may include one or more of: a sensing type, sensing resolution, sensing accuracy, a confidence level, a missed detection rate, a false alarm rate, and a refresh rate. The local traffic steering related information may include, for example, one or more of the following information: location information, UE identifier, a DNN, S-NSSAI and corresponding DNAI information. Step S714 may occur before step S716, but is not limited to occurring after step S712. That is, step S714 may occur at any time before step S716, such as before step 702.

In step S716, UDR transmits a data notification to PCF according to a subscription request from PCF. The data notification may include the identity of the first sensing service and configuration information associated with the first sensing service.

In step S718, PCF generates a corresponding PCC rule according to the configuration information obtained, and transmits it to SMF.

In step S720, SMF completes a session establishment/adjustment procedure according to the PCC rule.

In the example shown in FIG. 7, configuration information associated with the first sensing service is stored in the UDR. Then, the PCF can use the identity of the first sensing service as an index to subscribe to the configuration information associated with the first sensing service, which enables different PCFs to obtain the same configuration information so that consistent user plane configuration and adjustment can be applied to UEs.

It should be understood that the sensing service mentioned in the above embodiments may also be referred to as or replaced with the sensing task, sensing session, sensing service, or sensing request. For example, such a sensing service may refer to a specific sensing task, such as perform sensing on a target object or the environment.

It should also be understood that the sensing request mentioned above may also be referred to as or replaced with a sensing task request, a sensing service request, or a sensing session request.

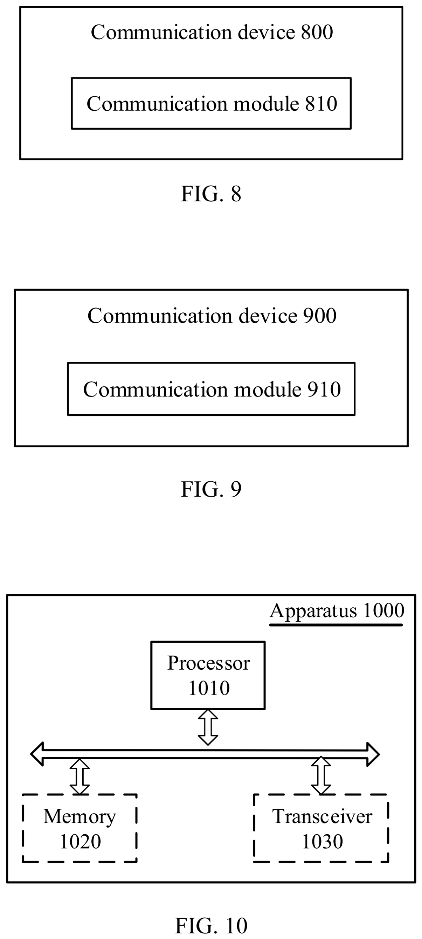

The method embodiments of the present application are described in detail above with reference to FIGS. 1 to 7, and the apparatus embodiments of the present application will be described in detail below with reference to FIGS. 8 to 10. It should be understood that the description of the method embodiments corresponds to the description of the apparatus embodiments, and therefore, for parts that are not described in detail, reference may be made to the previous method embodiments.

FIG. 8 is block diagram of a communication device provided in an embodiment of the present application. The communication device in FIG. 8 includes a communication module 810. The communication module 810 may be configured to receive a first message transmitted by a second network element, where the first message is associated with a first sensing service, and the first message includes one or more of the following information: an identity of the first sensing service; and user plane configuration information associated with the first sensing service.

In some embodiments, the first sensing service(s) are associated with the same PCF.

In some embodiments, the first network element is the PCF, and the second network element is an SF, an NEF, a GMLC or an LMF; the first message is used for requesting the PCF to authorize or modify the first sensing service.

In some embodiments, the first network element is a BSF, and the second network element is the PCF; the first message is used for registering an association relationship between the first sensing service and the PCF.

In some embodiments, the first network element is a BSF, and the second network element is another PCF different from the PCF; the first message is used for obtaining an identifier of a PCF corresponding to the first sensing service.

In some embodiments, the first sensing service is associated with one or more PCFs, and the one or more PCFs obtain the user plane configuration information based on a UDR.

In some embodiments, the first network element is the UDR, the second network element is one of the one or more PCFs, and the first message is used for subscribing to notifications associated with the identity of the first sensing service.

In some embodiments, the first network element is the UDR, the second network element is a network element requesting a sensing service, and the first message is used for storage of the user plane configuration information in the UDR.

In some embodiments, the first network element is an SF, an NEF, a GMLC or an LMF, the second network element is a network element requesting a sensing service, and the first message is used for requesting the first sensing service.

In some embodiments, the first network element is a terminal device, the second network element is an SF or an LMF, the first message is used for transmitting user plane information to the terminal device, and the user plane information is used for the establishment of a session corresponding to the first sensing service.

In some embodiments, the first network element is an SMF, the second network element is a terminal device, and the first message is used for requesting establishment or modification of a session corresponding to the first sensing service.

In some embodiments, the first network element is a PCF, the second network element is an SMF, and the first message is used for requesting a session policy corresponding to the first sensing service.

In some embodiments, the user plane configuration information includes one or more of the following information: a QoS related parameter; local traffic steering information; and a requirement parameter of the first sensing service.

In some embodiments, the requirement parameter of the first sensing service include one or more of: a sensing scenario, a sensing area, a confidence level, position estimation accuracy, velocity estimation accuracy, sensing resolution, a maximum sensing service delay, a missed detection rate, a false alarm rate, a refresh rate, and sensing accuracy.

In some embodiments, the local traffic steering related information is used to indicate whether to perform traffic steering processing on local data packets.

FIG. 9 is a block diagram of a communication device provided in another embodiment of the present application. The communication device in FIG. 9 includes a communication module 910. The communication module 910 may be configured to transmit a first message to a first network element, where the first message is associated with a first sensing service, and the first message includes one or more of the following information: an identity of the first sensing service; and user plane configuration information associated with the first sensing service.

In some embodiments, the first sensing service(s) are associated with the same PCF.

In some embodiments, the first network element is the PCF, and the second network element is an SF, an NEF, a GMLC or an LMF; the first message is used for requesting the PCF to authorize or modify the first sensing service.

In some embodiments, the first network element is a BSF, and the second network element is the PCF; the first message is used for registering an association relationship between the first sensing service and the PCF.

In some embodiments, the first network element is a BSF, and the second network element is another PCF different from the PCF; the first message is used for obtaining an identifier of the PCF corresponding to the first sensing service.

In some embodiments, the first sensing service is associated with one or more PCFs, and the one or more PCFs obtain the user plane configuration information based on a UDR.

In some embodiments, the first network element is the UDR, the second network element is one of the one or more PCFs, and the first message is used for subscribing to notifications associated with the identity of the first sensing service.

In some embodiments, the first network element is the UDR, the second network element is a network element requesting a sensing service, and the first message is used for storage of the user plane configuration information in the UDR.

In some embodiments, the first network element is an SF, an NEF, a GMLC or an LMF, the second network element is a network element requesting a sensing service, and the first message is used for requesting the first sensing service.

In some embodiments, the first network element is a terminal device, the second network element is an SF or an LMF, the first message is used for transmitting user plane information to the terminal device, and the user plane information is used for establishment of a session corresponding to the first sensing service.

In some embodiments, the first network element is an SMF, the second network element is a terminal device, and the first message is used for requesting establishment or modification of a session corresponding to the first sensing service.

In some embodiments, the first network element is a PCF, the second network element is an SMF, and the first message is used for requesting a session policy corresponding to the first sensing service.

In some embodiments, the user plane configuration information includes one or more of the following information: a Quality of Service (QoS) related parameter, local traffic steering related information, and a requirement parameter of the first sensing service.

In some embodiments, the requirement parameter of the first sensing service include one or more of: a sensing scenario, a sensing area, a confidence level, position estimation accuracy, velocity estimation accuracy, sensing resolution, a maximum sensing service delay, a missed detection rate, a false alarm rate, a refresh rate, and sensing accuracy.

In some embodiments, the local traffic steering related information is used to indicate whether to perform traffic steering processing on local data packets.

FIG. 10 is a block diagram of a communication apparatus according to embodiments of the present application. The dashed lines in FIG. 10 indicate that the unit or module is optional. The apparatus 1000 may be configured to implement the methods described in the above method embodiments. The apparatus 1000 may be a chip, a terminal device, or a network device.

The apparatus 1000 may include one or more processors 1010. The processor 1010 may support the apparatus 1000 to implement the methods described in the above method embodiments. The processor 1010 may be a general-purpose processor or a dedicated-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gates or transistor logic devices, discrete hardware components, etc. A general purpose processor may be a microprocessor, or the processor may be any conventional processor or the like.

The apparatus 1000 may further include one or more memories 1020. The memory 1020 stores a program, and the program may be executed by the processor 1010, to cause the processor 1010 to perform the methods in the above method embodiments. The memory 1020 may be independent of the processor 1010 or may be integrated into the processor 1010.

The apparatus 1000 may further include a transceiver 1030. The processor 1010 may communicate with other devices or chips via the transceiver 1030. For example, the processor 1010 may transmit and receive data with other devices or chips via the transceiver 1030.

The embodiments of the present application further provide a computer-readable storage medium configured to store a program. The computer-readable storage medium may be applied to the first network element or the second network element provided in the embodiments of the present application, and the program enables a computer to perform the methods performed by the first network element or the second network element in various embodiments of the present application.

The embodiments of the present application further provide a computer program product. The computer program product includes a program. The computer program product may be applied to the first network element or the second network element provided in the embodiments of the present application, and the program causes a computer to perform the methods performed by the first network element or the second network element in various embodiments of the present application.

The embodiments of the present application also provide a computer program. The computer program may be applied to the first network element or the second network element provided in the embodiments of the present application, and the computer program causes a computer to perform the methods performed by the first network element or the second network element in various embodiments of the present application.

It should be understood that the terms "system" and "network" may be used interchangeably in the present application. In addition, the terms used in the present application are only used to explain the specific embodiments of the present application and are not intended to limit the present application. The terms "first," "second," "third," "fourth" and the like in the specification, claims and drawings of the present application are used to distinguish different objects rather than to describe a specific order. In addition, the terms "includes/comprises," "has," and any variations thereof, are intended to cover a non-exclusive inclusion.

In the embodiments of the present application, the "indicate/indicated/indicating/indication" mentioned may be a direct indication, may also be an indirect indication, or may mean that there is an indication of an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiments of the present application, "B corresponding to A" means that B is associated with A, and B can be determined based on A. However, it should also be understood that determining B based on A does not mean determining B based solely on A. B may also be determined based on A and/or other information.

In the embodiments of the present application, the term "correspond/corresponding/correspondence" may indicate that there is a direct or indirect correspondence between two, may also mean that there is an associated relationship between the two, or may also mean a relationship of indicating and being indicated or a relationship of configuring and being configured, etc.

In the embodiments of the present application, "predefined" or "preconfigured" may be implemented by pre-saving corresponding codes, tables or other manners that may be used to indicate related information in devices (e.g., including a terminal device and a network device), and a specific implementation manner thereof is not limited in the present application. For example, the predefined may refer to what is defined in a protocol.

In the embodiments of the present application, the "protocol" may refer to a standard protocol in the communication field. For example, the "protocol" may include an LTE protocol, an NR protocol, and a related protocol used in a future communication system, which is not limited in present application.

In the embodiments of the present application, the term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

In various embodiments of the present application, values of serial numbers of the processes do not mean the order of execution. The execution order of each process should be determined by its function and internal logic, and should not constitute any limitation on the implementation process of the embodiments of the present application.

In the several embodiments provided in the present application, it should be understood that the disclosed systems, apparatuses, and methods may be implemented in other manners. For example, the apparatus embodiments described above are merely exemplary. For example, a division of units is merely a division based on a logical function and there may be other division manners in actual implementations. For example, multiple units or components may be combined or integrated into another system, or some characteristics may be omitted or skipped. In addition, coupling, direct coupling or communication connection between each other displayed or discussed may be indirect coupling or communication connection via some interfaces, apparatuses or units, which may be electrical, mechanical or in other forms.

The units described as separate components may or may not be physically separated, and the components displayed as units may be or may not be physical units. That is, they may be located in a place or distributed over multiple network units. Some or all of the units may be selected according to actual needs to achieve the purpose of the solutions of the embodiments.

In addition, various function units in various embodiments of the present application may be integrated into one processing unit, or various units may exist physically separately, or two or more units may be integrated into one unit.

All or some of the above embodiments may be implemented by software, hardware, firmware or any combination thereof. When implemented using software, all or some of the embodiments may be implemented in the form of a computer program product. The computer program product includes one or more computer instructions. When the computer program instructions are loaded and executed on a computer, all or some processes or functions described in the embodiments of the present application are generated. The computer may be a general purpose computer, a dedicated-purpose computer, a computer network, or other programmable device. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired manner (e.g., a coaxial cable, an optical fiber, a digital subscriber line (DSL)) or a wireless manner (e.g., an infrared or radio manner, microwave, etc.). The computer-readable storage medium may be any available medium that may be read by a computer or a data storage device such as a server or a data center that includes one or more available medium. The available medium may be a magnetic medium (e.g., a floppy disk, a hard disk, a magnetic tape), an optical medium (e.g., a digital video disc (DVD)), or a semiconductor medium (e.g., a solid state disk (SSD)).

The above description is only specific implementations of the present application, but the protection scope of the present application is not limited thereto. Any person skilled in the art familiar with the technical field may easily think of changes or substitutions within the technical scope disclosed in the present application, all of which should be included in the protection scope of the present application. Therefore, the protection scope of the present application shall be subject to the protection scope of the claims.

## Claims

1. A wireless communication method, comprising:
receiving, by a first network element, a first message transmitted by a second network element, wherein the first message is associated with a first sensing service, and the first message comprises one or more of the following information:
an identity of the first sensing service; and
user plane configuration information associated with the first sensing service.

2. The method according to claim 1, wherein the first sensing service is associated with a same policy control function (PCF).

3. The method according to claim 2, wherein
the first network element is the PCF, and the second network element is a sensing function (SF), a network exposure function (NEF), a gateway mobile location center (GMLC) or a location management function (LMF);
the first message is used for requesting the PCF to authorize or modify the first sensing service.

4. The method according to claim 2, wherein
the first network element is a binding support function (BSF), and the second network element is the PCF;
the first message is used for registering an association relationship between the first sensing service and the PCF.

5. The method according to claim 2, wherein
the first network element is a BSF, and the second network element is another PCF different from the PCF;
the first message is used for obtaining an identifier of the PCF corresponding to the first sensing service.

6. The method according to claim 1, wherein the first sensing service is associated with one or more PCFs, and the one or more PCFs obtain the user plane configuration information based on a unified data repository (UDR).

7. The method according to claim 6, wherein the first network element is the UDR, the second network element is one of the one or more PCFs, and the first message is used for subscribing to notifications associated with the identity of the first sensing service.

8. The method according to claim 6, wherein the first network element is the UDR, the second network element is a network element requesting a sensing service, and the first message is used for storage of the user plane configuration information in the UDR.

9. The method according to any one of claims 1 to 8, wherein the first network element is an SF, an NEF, a GMLC or an LMF, the second network element is a network element requesting a sensing service, and the first message is used for requesting the first sensing service.

10. The method according to any one of claims 1 to 9, wherein the first network element is a terminal device, the second network element is an SF or an LMF, the first message is used for transmitting user plane information to the terminal device, and the user plane information is used for establishment of a session corresponding to the first sensing service.

11. The method according to any one of claims 1 to 10, wherein the first network element is a session management function (SMF), the second network element is a terminal device, and the first message is used for requesting establishment or modification of a session corresponding to the first sensing service.

12. The method according to any one of claims 1 to 11, wherein the first network element is a PCF, the second network element is an SMF, and the first message is used for requesting a session policy corresponding to the first sensing service.

13. The method according to any one of claims 1 to 12, wherein the user plane configuration information comprises one or more of the following information:
a Quality of Service (QoS) related parameter;
local traffic steering related information; and
a requirement parameter of the first sensing service.

14. The method according to claim 13, wherein the requirement parameter of the first sensing service comprises one or more of: a sensing scenario, a sensing area, a confidence level, position estimation accuracy, velocity estimation accuracy, sensing resolution, a maximum sensing service delay, a missed detection rate, a false alarm rate, a refresh rate, and sensing accuracy.

15. The method according to claim 13 or 14, wherein the local traffic steering related information is used to indicate whether to perform traffic steering processing on local data packets.

16. A wireless communication method, comprising:
transmitting, by a second network element, a first message to a first network element, wherein the first message is associated with a first sensing service, and the first message comprises one or more of the following information:
an identity of the first sensing service; and
user plane configuration information associated with the first sensing service.

17. The method according to claim 16, wherein the first sensing service is associated with a same policy control function (PCF).

18. The method according to claim 17, wherein
the first network element is the PCF, and the second network element is a sensing function (SF), a network exposure function (NEF), a gateway mobile location center (GMLC) or a location management function (LMF);
the first message is used for requesting the PCF to authorize or modify the first sensing service.

19. The method according to claim 17, wherein
the first network element is a binding support function (BSF), and the second network element is the PCF;
the first message is used for registering an association relationship between the first sensing service and the PCF.

20. The method according to claim 17, wherein
the first network element is a BSF, and the second network element is another PCF different from the PCF;
the first message is used for obtaining an identifier of the PCF corresponding to the first sensing service.

21. The method according to claim 16, wherein the first sensing service is associated with one or more PCFs, and the one or more PCFs obtain the user plane configuration information based on a UDR.

22. The method according to claim 21, wherein the first network element is the unified data repository (UDR), the second network element is one of the one or more PCFs, and the first message is used for subscribing to notifications associated with the identity of the first sensing service.

23. The method according to claim 21, wherein the first network element is the UDR, the second network element is a network element requesting a sensing service, and the first message is used for storage of the user plane configuration information in the UDR.

24. The method according to any one of claims 16 to 23, wherein the first network element is an SF, an NEF, a GMLC or an LMF, the second network element is a network element requesting a sensing service, and the first message is used for requesting the first sensing service.

25. The method according to any one of claims 16 to 24, wherein the first network element is a terminal device, the second network element is an SF or an LMF, the first message is used for transmitting user plane information to the terminal device, and the user plane information is used for the establishment of a session corresponding to the first sensing service.

26. The method according to any one of claims 16 to 25, wherein the first network element is a session management function (SMF), the second network element is a terminal device, and the first message is used for requesting establishment or modification of a session corresponding to the first sensing service.

27. The method according to any one of claims 16 to 26, wherein the first network element is a PCF, the second network element is an SMF, and the first message is used for requesting a session policy corresponding to the first sensing service.

28. The method according to any one of claims 16 to 27, wherein the user plane configuration information comprises one or more of the following information:
a Quality of Service (QoS) related parameter;
local traffic steering related information; and
a requirement parameter of the first sensing service.

29. The method according to claim 28, wherein the requirement parameter of the first sensing service comprises one or more of: a sensing scenario, a sensing area, a confidence level, position estimation accuracy, velocity estimation accuracy, sensing resolution, a maximum sensing service delay, a missed detection rate, a false alarm rate, a refresh rate, and sensing accuracy.

30. The method according to claim 28 or 29, wherein the local traffic steering related information is used to indicate whether to perform traffic steering processing on local data packets.

31. A communication device, wherein the communication device is a first network element, and the first network element comprises:
a communication module, configured to receive a first message transmitted by a second network element, wherein the first message is associated with a first sensing service, and the first message comprises one or more of the following information:
an identity of the first sensing service; and
user plane configuration information associated with the first sensing service.

32. The communication device according to claim 31, wherein the first sensing service is associated with a same policy control function (PCF).

33. The communication device according to claim 32, wherein
the first network element is the PCF, and the second network element is a sensing function (SF), a network exposure function (NEF), a gateway mobile location center (GMLC) or a location management function (LMF);
the first message is used for requesting the PCF to authorize or modify the first sensing service.

34. The communication device according to claim 32, wherein
the first network element is a binding support function (BSF), and the second network element is the PCF;
the first message is used for registering an association relationship between the first sensing service and the PCF.

35. The communication device according to claim 32, wherein
the first network element is a BSF, and the second network element is another PCF different from the PCF;
the first message is used for obtaining an identifier of the PCF corresponding to the first sensing service.

36. The communication device according to claim 31, wherein the first sensing service is associated with one or more PCFs, and the one or more PCFs obtain the user plane configuration information based on a unified data repository (UDR).

37. The communication device according to claim 36, wherein the first network element is the UDR, the second network element is one of the one or more PCFs, and the first message is used for subscribing to notifications associated with the identity of the first sensing service.

38. The communication device according to claim 36, wherein the first network element is the UDR, the second network element is a network element requesting a sensing service, and the first message is used for storage of the user plane configuration information in the UDR.

39. The communication device according to any one of claims 31 to 38, wherein the first network element is an SF, an NEF, a GMLC or an LMF, the second network element is a network element requesting a sensing service, and the first message is used for requesting the first sensing service.

40. The communication device according to any one of claims 31 to 39, wherein the first network element is a terminal device, the second network element is an SF or an LMF, the first message is used for transmitting user plane information to the terminal device, and the user plane information is used for the establishment of a session corresponding to the first sensing service.

41. The communication device according to any one of claims 31 to 40, wherein the first network element is a session management function (SMF), the second network element is a terminal device, and the first message is used for requesting establishment or modification of a session corresponding to the first sensing service.

42. The communication device according to any one of claims 31 to 41, wherein the first network element is a PCF, the second network element is an SMF, and the first message is used for requesting a session policy corresponding to the first sensing service.

43. The communication device according to any one of claims 31 to 42, wherein the user plane configuration information comprises one or more of the following information:
a Quality of Service (QoS) related parameter;
local traffic steering related information; and
a requirement parameter of the first sensing service.

44. The communication device according to claim 43, wherein the requirement parameter of the first sensing service comprises one or more of: a sensing scenario, a sensing area, a confidence level, position estimation accuracy, velocity estimation accuracy, sensing resolution, a maximum sensing service delay, a missed detection rate, a false alarm rate, a refresh rate, and sensing accuracy.

45. The communication device according to claim 43 or 44, wherein the local traffic steering related information is used to indicate whether to perform traffic steering processing on local data packets.

46. A communication device, wherein the communication device is a second network element, and the second network element comprises:
a communication module, configured to transmit a first message to a first network element, wherein the first message is associated with a first sensing service, and the first message comprises one or more of the following information:
an identity of the first sensing service; and
user plane configuration information associated with the first sensing service.

47. The communication device according to claim 46, wherein the first sensing service is associated with a same policy control function (PCF).

48. The communication device according to claim 47, wherein
the first network element is the PCF, and the second network element is a sensing function (SF), a network exposure function (NEF), a gateway mobile location center (GMLC) or a location management function (LMF);
the first message is used for requesting the PCF to authorize or modify the first sensing service.

49. The communication device according to claim 47, wherein
the first network element is a binding support function (BSF), and the second network element is the PCF;
the first message is used for registering an association relationship between the first sensing service and the PCF.

50. The communication device according to claim 47, wherein:
the first network element is a BSF, and the second network element is another PCF different from the PCF;
the first message is used for obtaining an identifier of the PCF corresponding to the first sensing service.

51. The communication device according to claim 46, wherein the first sensing service is associated with one or more PCFs, and the one or more PCFs obtain the user plane configuration information based on a UDR.

52. The communication device according to claim 51, wherein the first network element is the unified data repository (UDR), the second network element is one of the one or more PCFs, and the first message is used for subscribing to notifications associated with the identity of the first sensing service.

53. The communication device according to claim 51, wherein the first network element is the UDR, the second network element is a network element requesting a sensing service, and the first message is used for storage of the user plane configuration information in the UDR.

54. The communication device according to any one of claims 46 to 53, wherein the first network element is an SF, an NEF, a GMLC or an LMF, the second network element is a network element requesting a sensing service, and the first message is used for requesting the first sensing service.

55. The communication device according to any one of claims 46 to 54, wherein the first network element is a terminal device, the second network element is an SF or an LMF, the first message is used for transmitting user plane information to the terminal device, and the user plane information is used for establishment of a session corresponding to the first sensing service.

56. The communication device according to any one of claims 46 to 55, wherein the first network element is a session management function (SMF), the second network element is a terminal device, and the first message is used for requesting establishment or modification of a session corresponding to the first sensing service.

57. The communication device according to any one of claims 46 to 56, wherein the first network element is a PCF, the second network element is an SMF, and the first message is used for requesting a session policy corresponding to the first sensing service.

58. The communication device according to any one of claims 46 to 57, wherein the user plane configuration information comprises one or more of the following information:
a Quality of Service (QoS) related parameter;
local traffic steering related information; and
a requirement parameter of the first sensing service.

59. The communication device according to claim 58, wherein the requirement parameter of the first sensing service comprises one or more of: a sensing scenario, a sensing area, a confidence level, position estimation accuracy, velocity estimation accuracy, sensing resolution, a maximum sensing service delay, a missed detection rate, a false alarm rate, a refresh rate, and sensing accuracy.

60. The communication device according to claim 58 or 59, wherein the local traffic steering related information is used to indicate whether to perform traffic steering processing on local data packets.

61. A communication device, comprising a transceiver, a memory and a processor, wherein the memory is configured to store a program, and the processor is configured to invoke the program stored in the memory and control the transceiver to receive or transmit signals, to cause the communication device to perform the method according to any one of claims 1 to 15 or 16 to 30.

62. An apparatus, comprising a processor, configured to invoke a program from a memory, to cause the apparatus to perform the method according to any one of claims 1 to 15 or 16 to 30.

63. A chip, comprising a processor, configured to invoke a program from a memory, to cause a device equipped with the chip to perform the method according to any one of claims 1 to 15 or 16 to 30.

64. A computer-readable storage medium, having a program stored thereon, wherein the program causes a computer to perform the method according to any one of claims 1 to 15 or 16 to 30.

65. A computer program product, comprising a program, wherein the program causes a computer to perform the method according to any one of claims 1 to 15 or 16 to 30.

66. A computer program, wherein the computer program causes a computer to perform the method according to any one of claims 1 to 15 or 16 to 30.
